# EUROPEAN PATENT APPLICATION

(11) **EP 3 299 993 A1**
(43) Date of publication of application: **28.03.2018**
(21) Application number: 16190137.6
(22) Date of filing: 22.09.2016
(51) Int. Cl.: G06K 9/00, B60W 40/068

(54) **METHOD AND ARRANGEMENT FOR DETERMINING A CONDITION OF A ROAD SURFACE**

(71) Applicant: OmniKlima AB, 405 30 Göteborg (SE)
(72) Inventor: Casselgren, Johan, 97592 Luleå (SE)
(74) Representative: Andersson, Per Rune

(57) **Abstract**

The invention relates to a method for determining a classification of a condition of a road surface (3) for vehicle (1) traffic, said method comprising: determining a road surface condition associated with a road surface (3); and providing image data related to said road surface (3). Furthermore, the method comprises: determining said road surface condition in a predetermined measuring spot (5) along said road surface (3); identifying a plurality of road area sections (11, 12, 13, 14, 15) as regarded across the road surface (3), by means of said image data; and combining data related to said road surface condition and said road area sections (11, 12, 13, 14, 15) in order to determine a classification of a condition of the road surface (3) in at least two of said road area sections (11, 12, 13, 14, 15). The invention also relates to an arrangement for determining a classification of a condition of a road surface (3) for vehicle (1) traffic.

## Description

### TECHNICAL FIELD

The invention relates to a method for determining a classification of a condition of a road surface for vehicle traffic, said method comprising the steps of determining a road surface condition associated with a road surface and providing image data related to said road surface.

The invention also relates to an arrangement for determining a classification of a condition of a road surface for vehicle traffic, said arrangement comprising a road condition sensor determining a road surface condition associated with a road surface and an image capturing device providing image data related to said road surface.

The invention can be used for different types of measurement systems for determining the condition of a particular road, suitably but not exclusively intended to be arranged in vehicles.

### BACKGROUND

In the field of road vehicle safety, there is a need for accurate information regarding the condition of various road surfaces on which vehicles are travelling. For example, it is of high importance to determine whether a particular road surface is dry or whether it is covered with ice, snow or water, or a mixture of such conditions. In this manner, drivers of vehicles can be informed of the condition of the roads on which they intend to travel.

In particular, such information regarding the condition of a road surface is important in order to establish the friction of the road surface, i.e. the tire to road friction, which in turn can be used for determining, for example, the required braking distance of a vehicle during operation. This type of information is important both as regards vehicles such as cars and motorcycles, and also for commercial vehicles such as heavy transport vehicles, buses and other types of commercial and private vehicles, in order to be able to travel on such road surfaces in a safe manner.

By using updated information related to the road condition, improvements in traffic safety as well as accurate predictions of the condition of different types of road surfaces can be obtained.

In order to solve the above-mentioned requirements, it is today known to use systems and methods for determining the condition of a road surface intended for vehicle traffic. Such known systems and methods include a process of determining the road condition associated with a road surface, which can be obtained by means of a suitable road condition sensor. Such a sensor can be arranged on a vehicle.

The patent document US 6807473 discloses a system for detection of a road condition which comprises an ultrasound sensor, a temperature sensor and also a camera arrangement. Data from these devices is transmitted to a microprocessor, by means of which said data is filtered and compared with reference data. In this manner, a classification of the road condition can be achieved, in particular for determining whether the road in question is covered with ice, snow or whether it is dry.

Even though the arrangement according to US 6807473 is configured for detecting different types of road conditions, there is still a need for improvements within this field of technology. For example, US 6807473 does not take into account that a certain road section may have different types of surface covering on different parts of the road. In other words, any given road section may have areas which are covered for example with snow or ice in some areas and which may be dry in other areas. Such information may be important in order to provide more accurate data related to the road surface condition, i.e. in order to improve road safety. There is thus a desire to provide a method and arrangement for methods and arrangements for determining the road condition which are more flexible and which may be used to obtain information in a more detailed and accurate manner regarding the road surface to be travelled than what is previously known.

### SUMMARY

Consequently, an object of the invention is to provide an improved method and arrangement which solves the above-mentioned problems associated with previously known solutions and which offers improvements in the field of determining the condition of a particular road surface.

The above-mentioned object is achieved by a method for determining a classification of a condition of a road surface for vehicle traffic, said method comprising: determining a road surface condition associated with a road surface; and providing image data related to said road surface. Furthermore, the method comprises: determining said road surface condition in a predetermined measuring spot along said road surface; identifying a plurality of road area sections as regarded across the road surface, by means of said image data; and combining data related to said road surface condition and said road area sections in order to determine a classification of a condition of the road surface in at least two of said road area sections.

The invention provides certain advantages over previously known technology, primarily due to the fact that gives a possibility to detect and identify different road area sections, as seen transversely across the road surface, based on the surface properties of each road area section. The invention can also be used to determine a road surface condition in each of said road area sections. This leads to an increased accuracy and consequently to improvements as regards road safety

The invention is particularly useful within the field of autonomous vehicles, i.e. vehicles being equipped with sensors and control systems and being configured for navigating such vehicles along a route in an autonomous manner. The invention may be used for providing accurate information regarding the road friction in different road areas, which is crucial in particular for autonomous vehicles since the steering and braking function of such a vehicle is dependent on the tire to road friction in all parts of a road surface which is travelled.

According to an embodiment, the method according to the invention comprises a step of identifying, by means of said image data, one or more of the following road area sections: a left wheel track, a right wheel track, a middle road section, an opposing lane, and a road edge.

According to an embodiment, the method according to the invention comprises a step of determining a road surface condition selected from at least one of the following: a dry and non-covered road surface, a road surface which is covered with water, a road surface which is covered with snow, and a road surface which is covered with ice.

According to an embodiment, the method according to the invention comprises a step of determining said classification or condition of said road surface by assuming that the condition of a road area in which said measuring spot is located is generally equal in any further road section which has generally the same image data as the road area section in which said measuring spot is located.

Furthermore, according to embodiments, the road condition in said measuring spot is determined through the use of a road condition sensor or by using measurements of operational conditions related to said vehicle.

The above-mentioned object is also achieved by means of an arrangement for determining a classification of a condition of a road surface for vehicle traffic, comprising a road condition sensor determining a road surface condition associated with a road surface and an image capturing device providing image data related to said road surface. The arrangement comprises a control unit for determining said road surface condition in a predetermined measuring spot along said road surface, for identifying a plurality of road area sections as regarded across the road surface, by means of said image data; and for combining data related to said road surface condition and said road area sections in order to determine a classification of a condition of the road surface in at least two of said road area sections.

The invention can be applied in different types of vehicles, such as cars, trucks, and buses.

Further advantages and advantageous features of the invention are disclosed in the following description and in the dependent claims.

### BRIEF DESCRIPTION OF THE DRAWINGS

Further objects, features, and advantages of the present disclosure will appear from the following detailed description, wherein certain aspects of the disclosure will be described in more detail with reference to the accompanying drawings, in which:
- Fig. 1: shows a simplified side view of a vehicle being driven on a road surface;
- Fig. 2: shows a view of a road surface as regarded from a driver's point view, i.e. from which the road surface is observed;
- Fig. 3: is an enlarged part view of a scanning window as shown in Fig. 2;
- Fig. 4: is a flow chart showing the operation of an embodiment of the invention.

### DETAILED DESCRIPTION

Different embodiments of the present invention will now be described with reference to the accompanying drawings. The arrangements described below and defined in the appended claims can be realized in different forms and should not be construed as being limited to the embodiments described below.

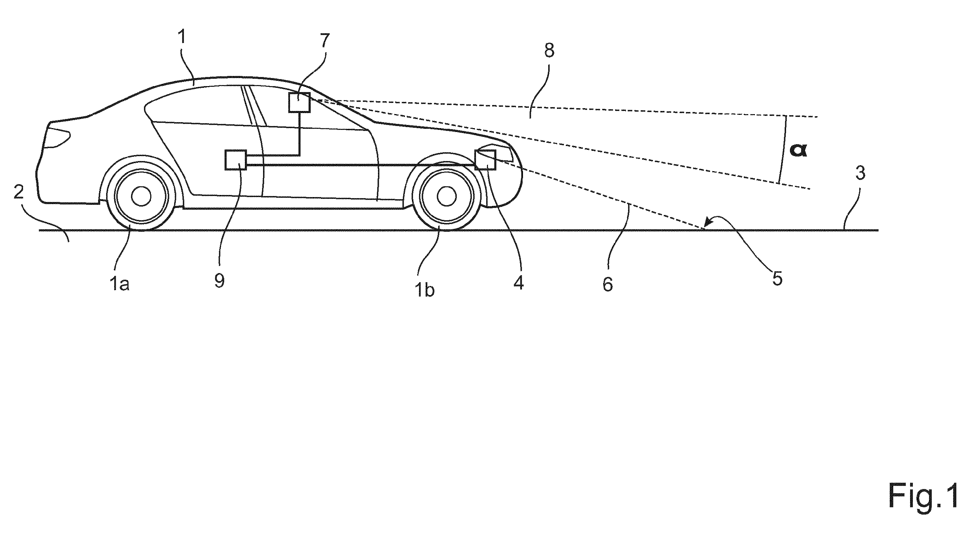

With initial reference to Fig. 1, there is shown a simplified side view of a vehicle 1 such as a conventional car which has four wheels (of which two wheels 1 a, 1b are visible in Fig. 1) and is being driven along a road 2 having a road surface 3, i.e. a top surface of the road 2 having a certain structure and causing a certain friction relative to the wheels 1 a, 1 b. According to different examples, the road surface 3 can be in the form of asphalt, concrete, gravel, sand, dirt, grass or generally any form of surface which can be used for vehicle traffic.

The invention is based on a need to determine a classification of the type of road surface 3, i.e. a classification of the surface condition of the road 2 on which the vehicle 1 is being driven. For this purpose, the vehicle 1 is provided with a road condition sensor 4 which is configured to be used to determine the condition of the road surface 3. In particular, the road condition sensor 4 is configured to determine the road condition in a given measurement spot 5. Suitably, this measurement spot 5 is located slightly ahead of the position of the vehicle 1 and depends for example on the actual position of the road condition sensor 4 in the vehicle 1. Also, although not visible in Fig. 1, the measurement spot 5 is suitably positioned along a detection direction 6 which is aligned with either the left or right side wheel track of the road surface 3, i.e. along one of the tracks where the wheels 1 a, 1 b of the vehicle 1 are expected to roll.

A road condition sensor 4 is previously known as such. For example, a suitable sensor is disclosed in the patent document SE 521094 and is based on a laser emitter device which is configured for emitting a ray of modulated laser light onto a road surface. The laser light is of a wavelength which is absorbed by ice or water. Reflected laser light is measured using a detector which is mounted close to the laser emitter. Based on the detected signal, it can be determined whether the road surface is covered with ice or water.

According to an embodiment, the road condition sensor 4 is used for determining whether the road surface 3 has one of a number of possible road surface conditions. For example:
i) the road surface 3 may be dry and non-covered, i.e. which corresponds to a relatively warm and dry weather without any snow, ice or water which covers the road surface 3; or
ii) the road surface 3 may be covered with water, i.e. which can be the case just after a rainfall; or
iii) the road surface 3 may be covered with snow, which can be the case after a snowfall; or
iv) the road surface 3 may be covered with ice, i.e. in case that snow or water covering the road surface 3 has frozen to ice.

In addition to the above-mentioned four main types of road surface 3 coverings, the road surface 3 can be covered by combinations or mixtures of different types, for example a mixture of snow and water, i.e. sleet or slush, or a mixture of ice and water, i.e. a road surface covered with ice which in turn is covered with a layer of water.

Furthermore, in case of snow covering the road surface 3, the snow can be for example in the form of bright white snow, which corresponds to a case where snow has just fallen, or it can be grey or dark, which corresponds to a case where the snow has been covering the road surface 3 for a relatively long period of time so that it is dirty from pollution and other substances. Both these conditions are relevant when determining the friction of the road surface 3 and for determining for example whether the road surface condition requires caution for drivers travelling along such roads.

As mentioned, in order to detect the road condition in a particular measurement spot 5 of the road surface 3, a road condition sensor unit 4 is provided. The road condition sensor unit 4 can be configured to detect whether the road surface 3 is covered and, if so, which type of road surface condition which applies to the road surface 3.

According to other embodiments, other types of sensor units can be used instead of the sensor 4 mentioned above which is based on emission of laser light. For example, an optical sensor based on spectral analysis can be used. Also, a sensor unit based on measurements of infrared radiation can be used for determining a road surface temperature. Such data can be used in combination with data related to air humidity and temperature in order to determine a road surface condition.

The term "road condition" may also be used to describe the friction between the road surface and the wheels 1 a, 1 b. For this reason, a sensor unit of the type which measures the friction can also be used in order to determine the road surface condition.

In addition, the road surface condition can be determined by means of measurements, data and parameters relating to the operation and condition of the vehicle 1. For example, it can be determined whether the windshield wipers are actuated in the vehicle. In such case, it can be assumed that there is either snow or rain falling on the road surface 3. According to a further example, it can be detected whether an arrangement of anti-lock braking system (ABS) (not shown in the drawings) arranged in the vehicle 1 is actuated. In such case, it can be assumed that the friction between the wheels and the road surface is relatively low, which may be the result of ice or snow covering the road surface. Other units, such as a traction control system (TCS) or an electronic stability control (ESC) system, determining parameters relating to the operation of the vehicle, can be used in order to determine the road surface condition, i.e. to determine whether the road surface 3 is covered with ice, water, snow or whether it is dry.

In summary, the road surface condition is determined either based on measurements from the road condition sensor 4 or based on measurements and operational conditions from other parameters related to the vehicle, as mentioned above. As will be explained below, these measurements and operational data can be analyzed so as to determine whether a certain road condition applies. It should be noted that this road surface condition applies along the wheel tracks of the vehicle 1, i.e. along the tracks where the wheels 1 a, 1 b are rolling.

Furthermore, according to an embodiment, the vehicle 1 is equipped with a camera unit 7, i.e. a device for capturing digital images and storing image data related to said images for later analysis and image treatment. The camera unit 7 is arranged in the vehicle so as to generate said image data within a scanning zone 8 which is directed generally ahead of the vehicle 1, in particular for scanning the road surface 3 which is located ahead of the vehicle 1. The scanning zone 8 defines a predetermined angle α. As will be described below, the camera unit 7 is arranged for scanning the entire transversal width of the road 2 on which the vehicle 1 is travelling. Also, the image data generated by the camera unit 7 is combined with the data related to the road condition - i.e. from the road condition sensor 4 or from other operational parameters of the vehicle 1 - so as to determine a classification of the condition of the entire road surface 3.

Furthermore, the sensor unit 4 and the camera unit 7 are connected to a control unit 9 which is arranged for analyzing the data from the sensor unit 4 and the camera unit 7 so as to determine whether a certain road condition applies. In particular, the control unit 9 comprises stored software for digital image treatment which is used for treatment of the image data from the camera unit 7.

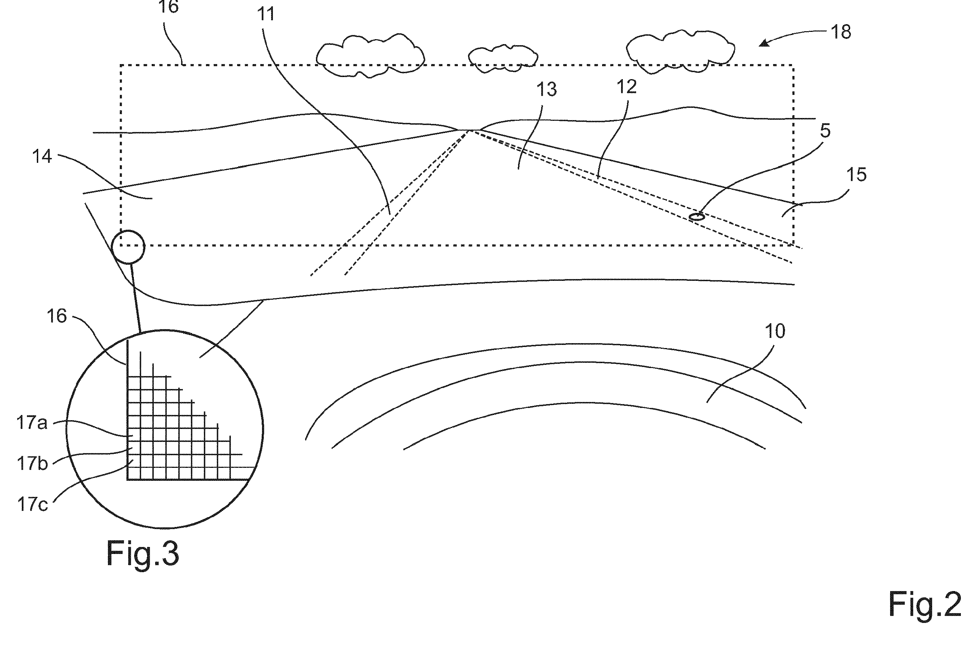

Fig. 2 is a schematic view of the road surface 3 as seen from the view of a driver driving the vehicle 1 in question. In other words, Fig. 2 represents a view of a driver sitting in the vehicle 1, behind a steering wheel 10. Also, Fig. 2 shows the view from a vehicle which is driven on the right side of the road 2.

As shown schematically in Fig. 2, the road surface 3 can be divided into a number of separate road area sections. Firstly, it can be noted that vehicle 1 will be driving with its wheels (not visible in Fig. 2) positioned in a left wheel track 11 and a right wheel track 12, respectively. Between the wheel tracks 11, 12 a middle road section 13 is located. Furthermore, an opposing lane 14 is seen on the left side as viewed from the driver's position. On the rightmost side of the road 2, a road edge 15 is located.

As shown schematically in Fig. 2, the camera unit 7 is configured for scanning along the entire width of the road 2. More precisely, a scanning window 16 is defined which covers all the above-mentioned road area sections 11, 12, 13, 14, 15. The position and extension of the scanning window 16 depends on the position of the camera unit 7 in the vehicle 1 and other settings of the camera unit 7. Furthermore, the scanning window 16 can be said to correspond to a digital image which is formed by an array of a large number of image pixels. This is illustrated in i simplified manner in Fig. 3, which is an enlarged portion of a small part of the scanning window 16 of Fig. 1. As shown in Fig. 3, the scanning window 16 is constituted by a number of pixels 17a, 17b, 17c, of which only a few are shown in Fig. 3. The pixels are arranged along a number of rows and columns which together form the scanning window 16. The arrangement of pixels 17a, 17b, 17c so as to form an array of an image capturing device is previously known as such, and for this reason it will not be described in greater detail.

The images which are generated by means of the camera unit 7 can be analyzed by means of digital image treatment software being stored and processed in the control unit 9. Such software is previously known as such and can be used, for example, for identifying different road area sections in an image by recognizing optical properties related to brightness or colour, or positions of edges and borders, or pattern recognition, extraction of image features or other image treatment in the different road areas. In this manner, the five different road area sections 11, 12, 13, 14, 15 can be separated and identified as mentioned above.

More precisely, the camera unit 7 and the control unit 9 are configured for identifying the different road areas sections 11, 12, 13, 14, 15 based on their optical properties, as detected through the image data contained in the images as captured by the camera unit 7. This means that the control unit 9 can distinguish between a number of areas, in this case the left wheel track 11, the right wheel track 12, the middle road section 13, the opposing lane 14 and the road edge 15. For example, an area which is analyzed as having a bright white colour can be expected to be covered with snow. Furthermore, an area which is analyzed as being relatively dark can be expected to a dry, non-covered area. Consequently, different areas in the scanning window 16 area having different optical properties can be detected and identified as different sections of the road 2 having particular road surface coverings and different road surface conditions.

In summary, and according to an embodiment described with reference to Fig. 2, at least the following distinct areas of the scanning window 16 can be detected and defined by means of the camera unit 7 and the control unit 9:
- a first area corresponding to the left wheel track 11;
- a second area corresponding to the right side wheel track 12;
- a third area corresponding to the middle road section 13;
- a fourth area corresponding to the opposing lane 14; and
- a fifth area corresponding to the road edge 15.

The invention is not limited to detection of just the road area sections as defined above, but can be used to detected further types of areas. For example, the camera unit 7 and the control unit 9 can be configured so as to detect areas such as the sky 18 over the road 2 based on its optical properties. Also, although not shown in Fig. 2, the opposing lane 14 may divided into two distinguishable wheel tracks, a middle section etc., depending on the layout of the road 2.

According to the invention, the road condition sensor 4 is first actuated so as to determine a road surface condition in the measurement spot 5, i.e. along the right wheel track 12. It is predetermined that the road condition sensor 4 is mounted in the vehicle 1 in a manner so that the measurement spot 5 will be positioned in the right wheel track 12. Furthermore, the camera unit 7 is actuated so as to capture images of the scanning window 16 ahead of the vehicle 1. In this manner, different road area sections 11, 12, 13, 14, 15 can be identified based on the optical properties of the captured images.

Furthermore, the control unit 9 is configured so as to combine data related to the road condition (in the right wheel track 12) and the identified road areas 11, 12, 13, 14, 15. This is preferably done by comparing image data and optical properties in the right wheel track 12 (where the measurement spot 5 is located) with image data for the other road area sections 11, 13, 14, 15. In this manner, certain assumptions can be made regarding the road condition in the other road area sections 11, 13, 14, 15. In the following, certain examples will be provided so as to explain the function of the invention.

Example 1: If the road condition sensor 4 indicates that the road surface condition (in the right wheel track 12) corresponds to a "dry surface" and the camera unit 7 indicates that the middle road section 13 is considerably brighter than the right wheel track 12 and/or having a colour which is white or close to white, it can be assumed that the middle road section 13 has a road surface 3 which is covered with snow. This means that there may be very low friction between the wheels of the vehicle if the driver should drive for example in the middle road section 13.

In fact, all road areas which have similar optical properties as the middle road section 13 will also be assumed to be covered with snow.

Example 2: If the road condition sensor 4 indicates that the road surface condition (in the right wheel track 12) corresponds to a surface which is covered with ice and the camera unit 7 indicates that all the other road areas are considerably brighter than the right wheel track 12, it can be predicted that snow is covering the road surface 3.

Example 3: If the road condition sensor 4 indicates that the road surface condition (in the right wheel track 12) corresponds to a "dry surface" and the camera unit 7 indicates that the middle road section 13 is considerably darker than the right wheel track 12, it can be assumed that the middle road section 13 is covered with water. This means that there may be a risk for a slippery middle road section 13, in particular if the temperature is low, or if the temperature is decreasing. Depending on the conditions at hand, there may possibly also be a risk for aquaplaning.

Consequently, the measurements from the road condition sensor 4 and the data in the images can be used for comparing road conditions in the different road area sections 11, 12, 13, 14, 15, in order to make a classification of the road surface condition over the entire road surface 3. Also, all the above-mentioned examples show that the road surface condition in each road area may give reason to introduce safety measures such as, for example, informing the driver to be cautious during driving due to icy road areas. This is important information to convey to the driver of the vehicle. For this reason, the control unit 9 may include means for informing the driver of the road condition, for example a display arranged in the vehicle's dashboard (not shown in the drawings). As another option, the control unit 9 may be configured for transmitting information regarding the road surface condition to external companies, for example road freight companies. Such information can be of assistance for example when planning which routes to travel.

In summary, the invention is used for determining a classification of a condition of the road surface 3 for vehicle 1 traffic, wherein the road condition of the surface 3 and the image data related to said road surface 3 are determined. In the context of this invention, the term "classification" refers to the process of investigating the entire road across its width, including a number of separately identified road area sections 11, 12, 13, 14, 15, each of which may have its own particular properties as regards the road surface condition. The surface road condition is initially determined in a measuring spot 5. Also, a plurality of road sections 11, 12, 13, 14, 15 across the road 2 is identified. Finally, by combining data related to the road surface condition and the road sections 11, 12, 13, 14, 15, this classification of the road surface 3 is determined in at least two of said road sections 11, 12, 13, 14, 15. Since the road surface condition is known in the right wheel track 12, a comparison between image data from that area with other areas will provide information regarding whether other areas have particular surface conditions.

An image which is captured by the camera unit 7 is stored in a manner in which image data is registered for all the pixels of the image. According to an embodiment, the pixels of the image contains image data defined according to the so-called RGB colour system. This system can be used to define all possible colours from a combination of red, green and blue colour components. In other words, each colour in the RGB colour system can be described by means of image data representing how much of the red, green and blue colour components which forms part of the colour in question. The red, green and blue components are defined as a number being defined, for example, by 8 bits each, thereby having number values extending from 0 to 255. For example, the colour black corresponds to a red value of 0, a green value of 0 and a blue value of 0, whereas the colour white corresponds to a red value of 255, a green value of 255 and a blue value of 255. A high number of further colours can be defined by all combinations of the red, green and blue values, each of which can extend between 0 and 255.

According to an embodiment, the camera unit 7 and the control unit 9 are configured for detecting the RGB colour code for each pixel 17a, 17b, 17c corresponding to the scanning window 16 shown in Fig. 2 and with reference to Fig. 2. The set of pixels 17a, 17b, 17c (see Fig. 3), each of which has its own RGB colour code, corresponds to the optical properties of the image in question. In this manner, the control unit 9 may differentiate between different areas within the scanning window 16 by comparing RGB color codes for the pixels corresponding to the entire scanning window 16.

The invention is not limited to processing image data according to the RGB colour coding system. Another useful system is the so-called CMYK system, which is a subtractive colour system which uses four colours (cyan, magenta, yellow and black), which are normally used during colour printing. The CMYK system is based on a principle in which colours are partially or entirely masked on a white background.

According to an embodiment, data related to the classification of the road surface condition can be associated with a time stamp and also with position data. In other words, information can be generated which indicates when and where the road surface condition was classified. This is particularly useful if said data is to be used in applications for example for generating maps with information relating to the road surface condition along certain roads on such maps. Such map-generating applications can for example be used in other vehicles, in order to present relevant road-related status information.

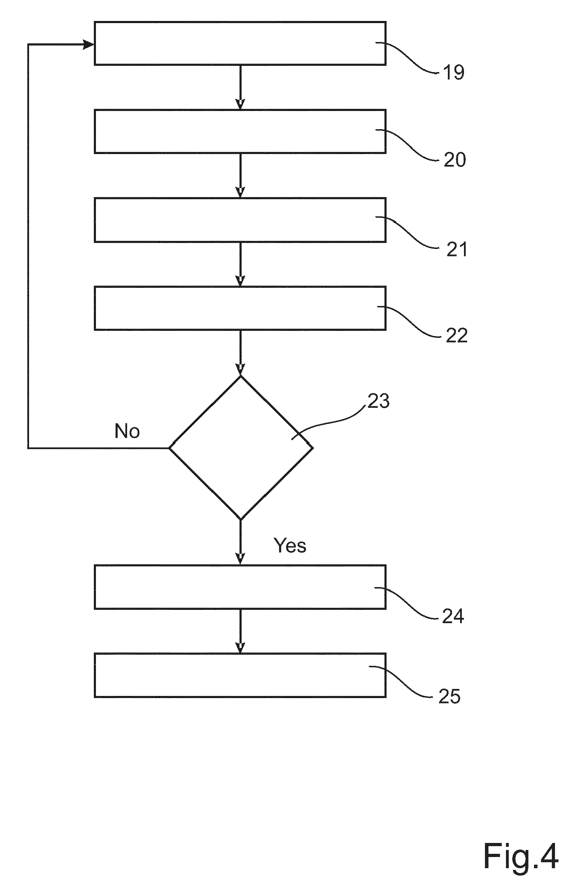

Fig. 4 is a simplified flow chart showing the operation of an embodiment of the invention. Initially, the road condition sensor 4 is actuated (step 19 in Fig. 4) so as to determine a road surface condition (step 20) in a road area corresponding to the position of the road condition sensor 4, suitably the right wheel track 12 as described above. Next, the camera unit 7 is actuated (step 21) and arranged for identifying a number of road areas (step 22) by means of a process of analyzing image data.

Next, data related to the determined road surface condition and the identified road areas are combined and compared in the control unit 9 in order to provide a classification of the surface condition of the entire road surface in question. In particular, the control unit 9 is arranged for comparing the image data in the right wheel track 12 with image data in all the remaining identified road areas and for determining whether any other road area has image data which differs considerably from the right wheel track, for example if it is much brighter or much darker (step 23). If this is the case, it is assumed that the road area in question has another type of road surface condition than the right wheel track 12 (step 24). Based on the optical properties in the road areas, assumptions are made in the control unit 9 so as to determine the road surface condition of the relevant road areas. Certain examples of such comparisons of image data have been described above. Finally, information related to the road surface conditions is suitably also presented to the driver of the vehicle (step 25).

An important purpose of determining a road surface condition in the wheel tracks is to determine a measurement of the friction between the wheels 1 a, 1 b and the road surface 3. This gives valuable information regarding necessary braking distances for the vehicle 1. For this reason also, it can be noted that the invention can particularly be used in the field of autonomous vehicles, i.e. driver-less vehicles. In this field, calculations related to road friction are crucial from a safety point of view. This means that information related to different road areas, their surfaces and the surface properties constitutes important information which can be used for operating autonomous vehicles.

It is to be understood that the present invention is not limited to the embodiments described above and illustrated in the drawings. The skilled person will recognize that changes and modifications may be made within the scope of the appended claims.

For example, other parameters than data from the road condition sensor 4 and the camera unit 7 can be used. Such an example is data related to the temperature of the road surface 3, which can be crucial when determining for example the friction of the different road area sections 11, 12, 13, 14, 15. As an example, if the road condition sensor 4 indicates that the road surface condition (in the right wheel track 12) corresponds to a "dry surface" and the camera unit 7 indicates that the middle road section 13 is darker than the right wheel track 12, it can be assumed that the middle road section 13 is covered with water. If a temperature sensor also indicates that the temperature is relatively low, possibly also that the temperature is rapidly decreasing over time, there may be a considerable risk for very slippery road conditions.

According to a further example, if the road condition sensor and the camera unit indicate that the wheel tracks are covered with water even though the temperature is below zero degrees Centigrade, it can be assumed that the wet road surface is the result of a use of road salt having been spread out on the road surface.

As mentioned above, the camera unit 7 can be used for generating image data also relating to the sky 18 (see Fig. 2). This means that certain information relating to the weather, formation of clouds etc., can be used. As an example, if the road condition sensor and camera unit indicate that the wheel tracks are dry, i.e. non-covered, while at the same time the image data related to the sky 18 indicates a relatively dark colour, it can be expected that clouds occur in the sky 18 and that rain may fall (or possibly snow, depending on the temperature) further ahead on the road 3.

Furthermore, and in addition to the road condition sensor 4 mentioned above, the invention may also include a further road condition sensor (not shown in the drawings) which is arranged for determining the road condition in the left wheel track 11 (see Fig. 2). In this manner, an even more accurate measurement process can be obtained since the road surface condition in the left wheel track 11 and the right wheel track 12 can be independently determined.

Also, the image data mentioned above can be data generated both in the form of still pictures and a video signal.

Finally, the inventive concept is not limited to use in vehicles such as cars, trucks and buses, but can be used in fixed, i.e. non-movable, monitoring stations for carrying out measurements in the same manner as explained above.

## Claims

1. Method for determining a classification of a condition of a road surface (3) for vehicle (1) traffic, said method comprising:
- determining a road surface condition associated with a road surface (3); and
- providing image data related to said road surface (3);
**characterized in that** said method further comprises:
- determining said road surface condition in a predetermined measuring spot (5) along said road surface (3);
- identifying a plurality of road area sections (11, 12, 13, 14, 15) as regarded across the road surface (3), by means of said image data; and
- combining data related to said road surface condition and said road area sections (11, 12, 13, 14, 15) in order to determine a classification of a condition of the road surface (3) in at least two of said road area sections (11, 12, 13, 14, 15).

2. Method according to claim 1, further comprising:
- identifying, by means of said image data, one or more of the following road area sections (11, 12, 13, 14, 15):
a left wheel track (11);
a right wheel track (12);
a middle road section (13);
an opposing lane (14); and
a road edge (15).

3. Method according to claim 1 or 2, further comprising:
- determining a road surface condition selected from at least one of the following:
a dry and non-covered road surface (3);
a road surface (3) which is covered with water;
a road surface (3) which is covered with snow; and
a road surface (3) which is covered with ice.

4. Method according to any one of the preceding claims, further comprising:
- determining said classification or condition of said road surface (3) by assuming that the condition of a road area (12) in which said measuring spot (5) is located is generally equal in any further road area section (11, 12, 13, 14, 15) which has generally the same image data as the road area section in which said measuring spot (5) is located.

5. Method according to any one of the preceding claims, further comprising:
- determining said image data by detecting pixel values according to the RGB colour system in a scanning window (16) ahead of said vehicle (1).

6. Method according to any one of the preceding claims, further comprising:
- determining said road condition in said measuring spot (5) through the use of a road condition sensor (4) or by using measurements of operational conditions related to said vehicle (1).

7. Method according to any one of the preceding claims, further comprising:
- generating a time stamp and position data to be associated with data related to said road surface condition.

8. Arrangement for determining a classification of a condition of a road surface (3) for vehicle (1) traffic, comprising a road condition sensor (4) determining a road surface condition associated with a road surface (3) and an image capturing device (7) providing image data related to said road surface (3);
**characterized in that** said arrangement further comprises a control unit (9) for determining said road condition in a predetermined measuring spot (5) along said road surface (3), for identifying a plurality of road area sections (11, 12, 13, 14, 15) as regarded across the road surface (3), by means of said image data; and for combining data related to said road condition and said road areas (11, 12, 13, 14, 15) in order to determine a classification of a condition of the road surface (3) in at least two of said road area sections (11, 12, 13, 14, 15).

9. A vehicle (1) comprising an arrangement for classification of a condition of a road surface (3) according to claim 7.
